Europäisches Patentamt

European Patent Office

Office européen des brevets

(11) Publication number: **0 111 537**
**B1**

(12) **EUROPEAN PATENT SPECIFICATION**

(45) Date of publication of patent specification: **10.12.86**

(51) Int. Cl.⁴: **B 65 G 19/02, B 65 G 35/00**

(21) Application number: **83902088.0**

(22) Date of filing: **23.06.83**

(86) International application number:
**PCT/DK83/00066**

(87) International publication number:
**WO 84/00143 19.01.84 Gazette 84/02**

(54) **AN APPARATUS FOR ROWWISE ACCUMULATION OF ROLLER CONTAINERS.**

(30) Priority: **23.06.82 DK 2810/82**

(43) Date of publication of application:
**27.06.84 Bulletin 84/26**

(45) Publication of the grant of the patent:
**10.12.86 Bulletin 86/50**

(84) Designated Contracting States:
**AT BE CH DE FR GB LI LU NL SE**

(56) References cited:
**DE-B-1 212 884**
**FR-A-1 522 130**
**GB-A-1 133 951**
**GB-A-1 290 065**
**GB-A-1 333 296**
**US-A-3 357 368**

(73) Proprietor: **UNIVEYOR A/S**
**Industrivej 8**
**DK-9510 Arden (DK)**

(72) Inventor: **DOHN, Kristian**
**Balgårdsvej 37**
**DK-8981 Spentrup (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

The present invention relates to an apparatus for rowwise accumulation of roller containers, and of the type stated in the introduction of claim 1.

By distribution of goods and by handling of goods, e.g. post parcels and sacks, wheel supported containers — so-called roller containers in the form of shop containers, post containers or roller pallets are used to an increasing extent. Storing of empty or loaded roller containers requires rather a great deal of floor space and also large free floor areas are required for driving and shunting with as well empty as loaded roller containers.

By the dispatching of goods in roller containers the individual containers are loaded with the goods in question and are being concentrated for delivery via gate platform for carting out by means of lorries. In this connection a great deal of floor space and a lot of time could be saved if the roller containers could be successively conveyed in a close row to a delivery position, e.g. at a gate platform rather than by individual, manual fetching of the containers in the store hall.

An apparatus of the type stated in the introduction of claim 1 is known from GB—A—1,290,065. The gripping means are attached to the vehicle and to be activated for engagement with the endless pulling system, whereas releasing of this engagement is dependent of the vehicle running against a preceding vehicle or another activation stop. Arranging of the gripping means as well as the releasing means on the vehicle has the disadvantage that each vehicle has to be adapted to the accumulation apparatus.

GB—A—1,333,296 shows a conveyor system with gripping means attached to an endless pulling system. However, the gripping means are mounted below the bottom portion of the slidable containers, which is hardly possible at handling roller containers of the above mentioned type. Moreover, the gripping means have to engage driving recesses on the bottom of a container, i.e. a specially adapted container, and are, together with the endless pulling system housed in a separate apparatus part placed between two guiding side walls.

Object of the invention is to provide an apparatus of the above mentioned type by means of which roller containers can be handled quick and easy, which apparatus is adapted to be mounted on a plane floor surface, e.g. in existing store buildings, and may handle roller containers of standard width without particular adaptions for the cooperation with the gripping means.

The apparatus according to the invention is characterized in that the gripping means are movably connected to the endless pulling system and project sideways into the path from which position the gripping means are retractable out of the path by the guiding member, which too projects sideways into the path and is rigidly connected to the gripping means.

Hereby is obtained an apparatus with a very simple function and being provided for mounting directly upon a plane surface, i.e. an apparatus which without serious structural adaptions may be mounted in existing storehouses. Rowwise accumulation or concentration of roller containers, e.g. post containers or shop containers, may in an easy and safe manner be carried out by means of the apparatus stated, because the conveying mechanism and the control means thereof of course have to be adapted to the actual type and size of the container. The apparatus according to the invention may right away be used for handling of roller containers having various length and height as long as the container have approximately the same width and uniform construction concerning wheel chassis and platform portion.

Preferably the conveying mechanism of the apparatus according to the invention consists cf. claim 2 of two roller chains which give a more stable connection to the gripping means and to the guiding thereof. The guiding of these appropriately may be further stabilized — according to claim 3 — by letting the upstream side of the roller chains being guided in special sliding guides which furthermore are used for the slide guiding of the gripping means.

Claim 4 states a particularly appropriate embodiment of the gripping means which makes the apparatus qualified for the handling of postal containers and shop containers of the type having a wheel supported platform portion and upstanding corner posts together with sides of metal netting. Hereby the guiding pawl by the engagement with the side edge of the platform portion may control the turning in of the driving hook so that this partly may pass unimpededly past already concentrated roller containers in the accumulation path and partly may catch a foremost corner post of a roller container positioned behind or in the feeding in position for conveying forwards of said roller container. When the guiding pawl abuts the support side of a roller container positioned in front thereof the guiding pawl and thereby the driving hook will be turned away from the following container, which will thereby be disengaged close behind already concentrated roller containers etc.

According to claim 5 an appropriate sidewards displacement or bringing in position of roller containers may be obtained, which by way of example are fed in or are positioned less precise in the feeding in position of the path, e.g. by means of a fork-lifter. Also in the delivery position it may — as stated in claim 6 — be appropriate to disengage the gripping means, e.g. at a distance behind the container already being positioned in the delivery position. This may in particular be the case where containers from the delivery position are fetched by means of fork-lifters, as a certain distance to the next container is preferred so that the first mentioned container unimpededly may be lifted out from the path.

According to claim 7 it is obtained that the driving hook easily may be turned out of the accumulation path by the projecting of the guiding ruler into the movement path of guiding roller e.g. as already mentioned to ensure a certain distance between the containers in the delivery position.

Claim 8 states a particularly simple and appropriate side guiding of the containers in the accumulation path which simply is defined between the conveying mechanism and the guiding rail placed opposite thereto which guiding rail like the conveying mechanism may be mounted directly on a plane floor. By the statement of claim 9 is obtained a simple alternative device by which the roller container in a way are wedged in between the guiding rollers and the dischargeable clamping portions of the pulling system.

The invention is described in more detail in the following reference being made to the accompanying drawing, in which:—

Fig. 1 is a sketch in principle of an apparatus according to the invention,

Fig. 2 is a perspective partial view illustrating the pulling system by the apparatus according to the invention,

Fig. 3 a plane partial view for a more detailed illustration of the pulling system,

Fig. 4 a sectional view cf. IV—IV in Fig. 1 of the conveyor mechanism by the apparatus according to the invention,

Fig. 5 is a plane side view of the conveyor mechanism,

Fig. 6 a plane view — seen from the top side — of an embodiment for an apparatus according to the invention,

Fig. 7 a sketch in principle of more built together apparatuses according to the invention, and

Fig. 8 a plane sectional view of another embodiment for an apparatus according to the invention.

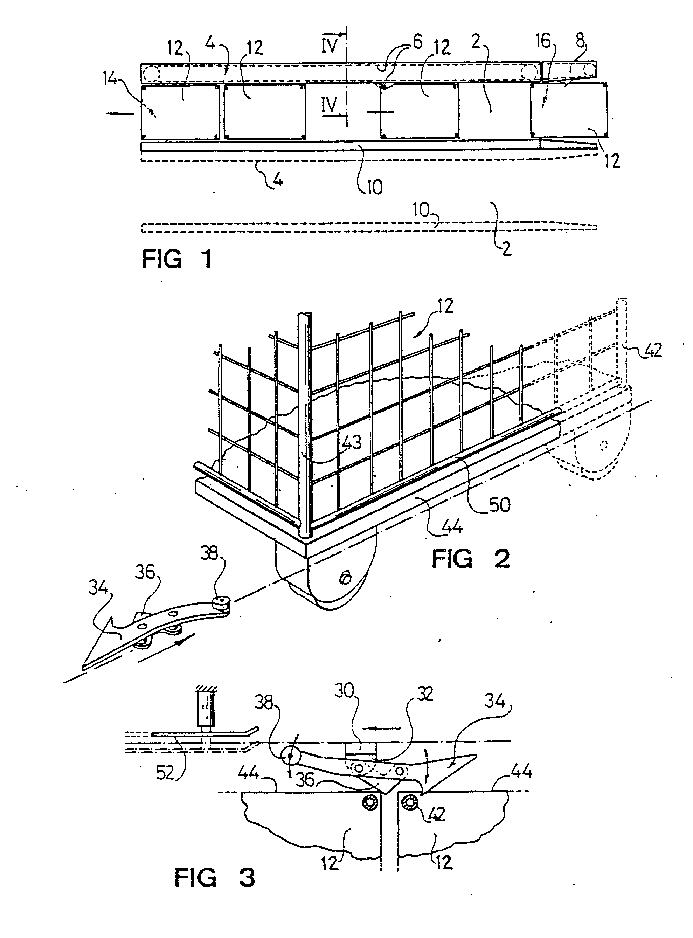

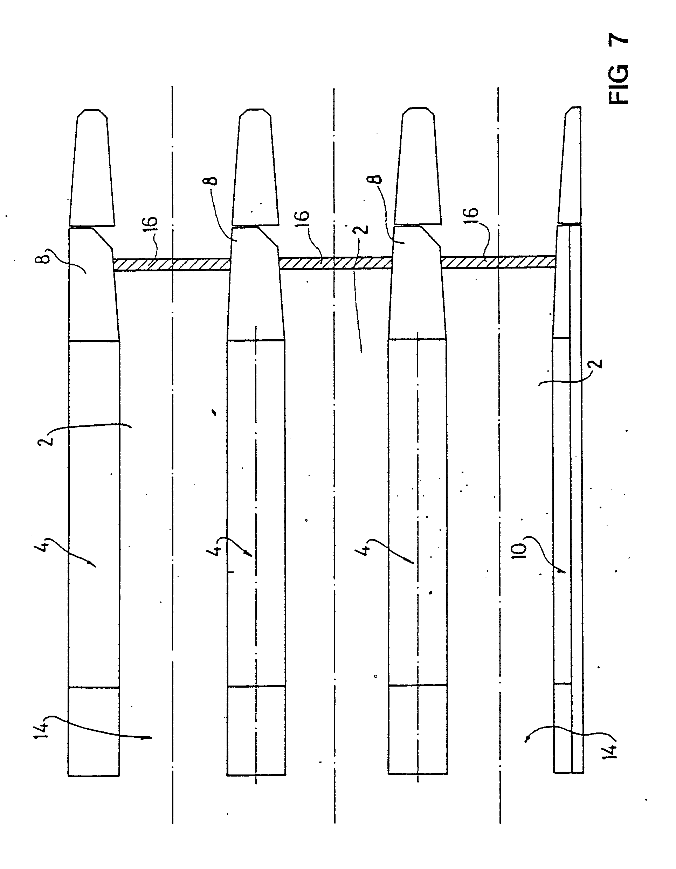

The apparatus shown in Fig. 1 comprises a conveying mechanism 4 placed at one side of an accumulation path 2, which conveying mechanism is constructed as an oblong upstanding device portion for floor mounting having a horizontally arranged chain conveyor 6 with swing nose portion 8. The accumulation path 2 is opposite to the conveying mechanism 4 limited by an upstanding guiding rail 10, as the width of the accumulation path 2 is adjusted in accordance with the width of roller containers 12 of which four are shown, viz. two containers 12 which are already concentrated in the accumulation path 2, so that the foremost container 12 is positioned in a delivery position, one container 12, which is being conveyed in the accumulation path 2 and one container 12 which is positioned in the feeding in position 16. By building together more apparatuses according to the invention in order to get more parallel accumulation paths 2 the guiding rail 10 may be replaced by a further conveying mechanism 4, the rear side of which may then be used as side guide for the containers 12 etc., see also Fig. 7, in which are shown three parallel accumulation paths 2.

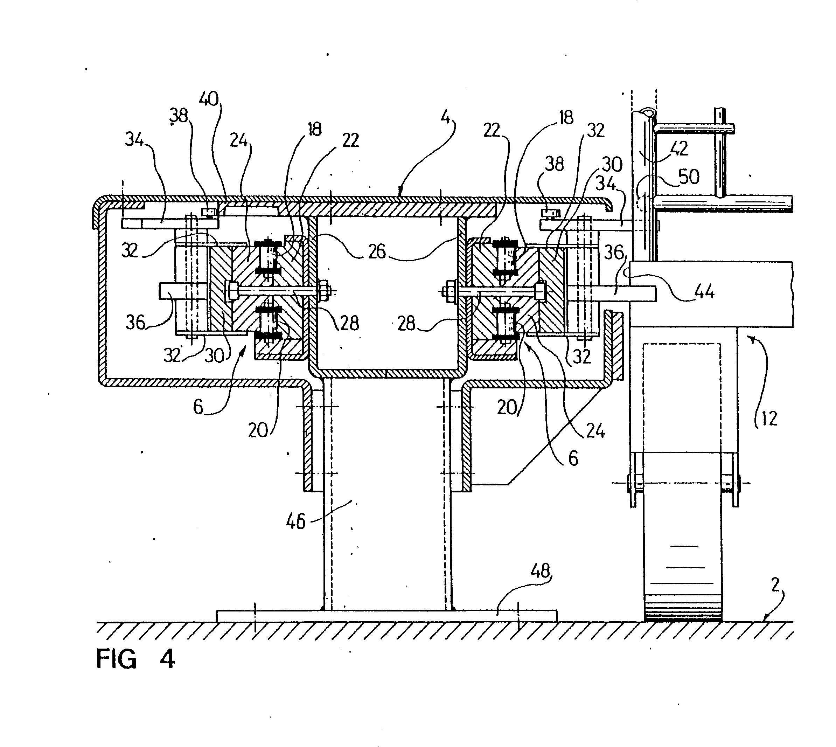

In Fig. 4 is shown a section through the conveying mechanism 4 which as already mentioned consists of a horizontally placed chain conveyor 6 with two roller chains 18 and 20, the active conveying runs of which are shown in the righthand side of Fig. 4 in which the movement direction of the active conveying run is upwards from the plane of the paper. The roller chains 18 and 20 are guided in plastic profiles 22 and 24 which are secured to opposite sides of a central longitudinal girder 26 by means of bolts 28. The plastic profile 24 forms furthermore a guiding for a slide block 30 which is also connected with both roller chains 18 and 20 by means of bracket plates 32 to which a driving hook 34 and a guiding pawl 36 are pivotally connected — however, in such a manner that the guiding pawl 36 and the driving hook 34 are guidingly connected with each other. The driving hook 34 is opposite the hook portion provided with a guiding roller 38 which among other on the return run side of the chain conveyor causes the turning in of the driving hook 34 by abutment against the outer flange portion of a profile guide 40.

At the active conveying run of the chain conveyor the driving hook 34 is shown in a turned out position as the outer hook portion thereof has hold behind a foremost corner post 42 of a roller container 12, the platform side edge 44 of which being positioned just behind the guiding pawl 36 which has inclined side edges as well forwards as rearwards, so that the guiding pawl 36 may slide off on the platform side edge 44 of the container 12, which, if desired, without further may then be pushed forwards in the accumulation path 2, whereby also the driving hook 34 is just turned out from the accumulation path 2.

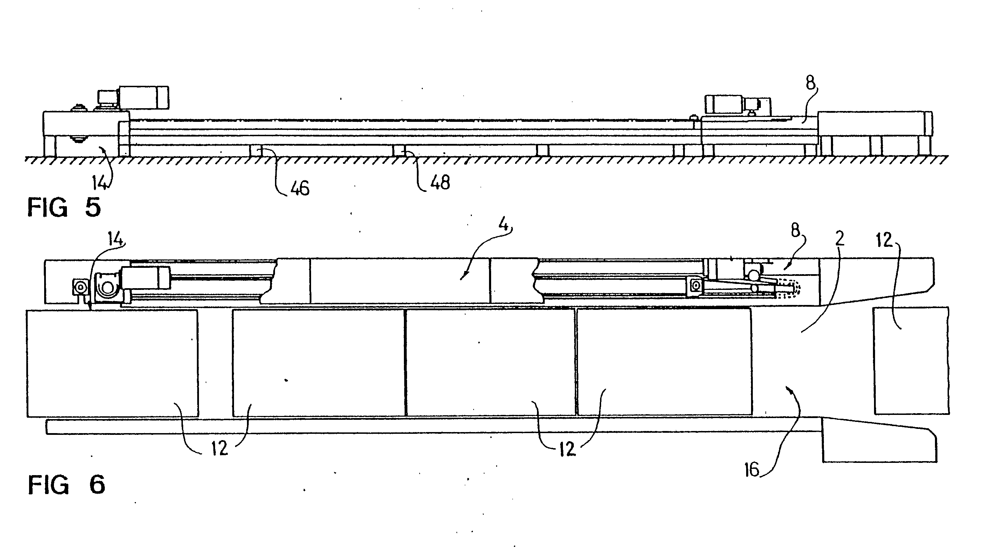

The longitudinal girder 26 is supported on a floor surface by means of short posts 46 with base members 48 (see also Fig. 5).

The function of the driving hook 34 is shown more clearly in Figs. 2 and 3, as the driving hook 34 in Fig. 2 is shown in its conveying position, i.e. with the hook portion thereof turned out in the accumulation path 2, so that the hook portion is positioned sidewards opposite the corner posts of the container. However, the driving hook 34 may not catch the rearmost corner post 43, because the guiding pawl 36 automatically causes the turning away of the driving hook 34, when the guiding pawl 36 slides in along the platform side edge 44 of the container 12, while the guiding pawl 36 once more causes the turning in of the driving hook immediately after the guiding pawl 36 getting clear of the platform side edge 44, so that the driving hook 34 gets hold behind the foremost corner post 42 of the container 12.

It should be mentioned that the guiding pawl 36 and the driving hook 34 is mutually height displaced which is shown most clearly in Fig. 4 in which it is shown that while the guiding pawl 36 is placed in level with the platform side edge 44 the driving hook 34 is placed above the platform side edge 44 but below the lowermost longitudinal side strut 50 of the netting side of the container 12. In Fig. 3 is shown how disengagement or turning back of the driving hook 34 is caused when a container 12 catches up with a preceding container 12 in the accumulation path 2. The guiding pawl 36 abuts the rearmost corner of the platform side edge 44 of the foremost container 12, whereby the driving hook 34 begins its turning back and disengages from its engagement behind the foremost corner post 42 of the rearmost container 12, so that this as shown stops close behind the foremost container 12. If as previously mentioned some distance to the next container 12 in the path is desired e.g. in the delivery position a particular guiding ruler 52 may be used, which is displaced into the movement path of the guiding roller 38 which then causes earlier turning away of the driving hook 34 for disengagement of a following container 12.

As introductorily mentioned and as shown in Figs. 1, 5, 6 and 7 the apparatus may be provided with a particular guiding in nose 8, which forms a sidewardly displaceable front portion of the chain conveyor and the side guidings. The turning in and out of the guiding in nose 8 is controlled by a gear motor and an eccentric together with a compression spring, the latter causing the turning out of the guiding in nose 8 for sidewards correct placing of a container 12 in the feeding in position 16 while the gear motor and the excentric causes the turning back of the guiding in nose and the clamping together of the compression spring.

In front of the feeding in position 16 is preferably placed a separate, funnel-shaped feeding in guiding which has for its purpose to easy the guiding in of containers 12 in the feeding in position 16, from which the chain conveyor and the guiding in nose, if any, take over the containers. The chain conveyor is driven by a gear motor which is placed at the delivery position.

The apparatus may be manually controlled so that the chain conveyor is started and operates permanently when the system is needed. However, the normal condition would be that the apparatus is provided with an automatical control system which by the feeding in and/or the delivering out of a container causes the activation of the chain conveyor etc. for operation during a certain period of time.

By way of example the apparatus may be controlled in the following way:

A container 12 is fed into the feeding in position 16 manually or by fork-lifter, hereby a photo-electric cell is activated, which shortly thereafter activates the gear motor for the guiding in nose 8, which takes care of a possibly necessary sidewise correction of the position of the container. Then the chain conveyor 6 is started together with the first arriving driving hook 34, of which a suitable number may be uniformly spread along the chain conveyor 6, gets hold behind the foremost corner post 42 of the container 12 and convey this forwards to the delivery position 14 or up behind a preceding container.

After a predetermined period of time the chain conveyor 6 will stop. Renewed activation may be caused by feeding in of another container in the feeding in position 16 or by taking out a container from the delivery position 14, in which also a photo-electric cell is placed, which activates the chain conveyor by taking out a container from the delivery position 14. If the apparatus is provided with said particular stop ruler for keeping a certain distance to the next container in the path 2 this stop ruler is displaced backwards out from the movement path for the guiding roller 38 of the driving hook, whereafter the chain conveyor is started. When the now foremost container arrives to the delivery position 14 and activates the photo-electric cell — which moreover detects the presence of a front wheel of the container — the stop ruler 52 is again brought forwards and the chain conveyor which is still in operation takes care of successively forwards conveying of the other containers in the accumulation path 2 etc.

Moreover the accumulation path 2 may have any suitable length as the apparatus according to the invention is sectioned in such a manner that as well the delivery position 14 including main motor as the feeding in position including a possible guiding in nose 8 so as a feeding in funnel may be provided with a suitable number of uniform intermediate sections, i.e. the roller chains and the number of driving hooks just have to be adjusted in accordance with the total length of the apparatus and of course in accordance with the actual size and type of containers.

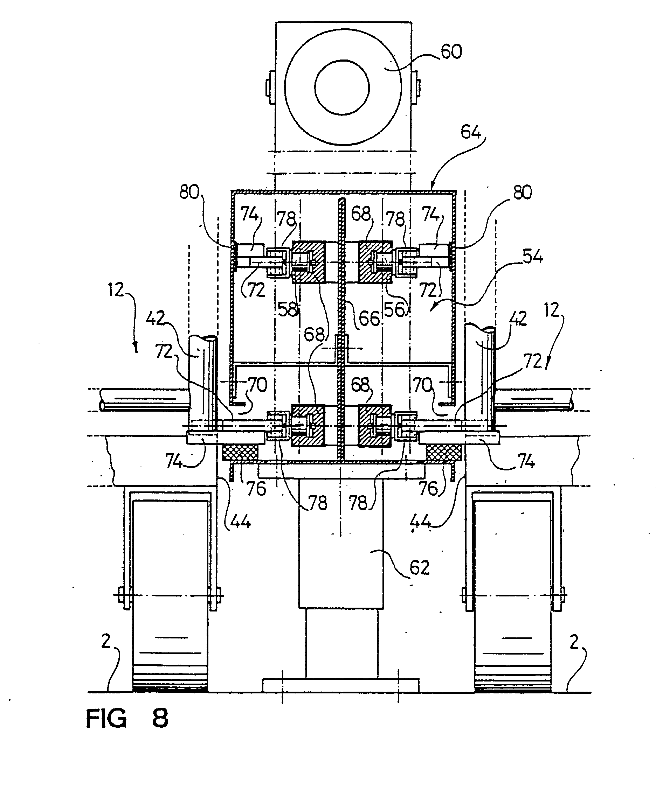

By the other embodiment for the apparatus according to the invention shown in Fig. 8 is used a double chain conveyor 54 arranged between two accumulation paths 2 for each row of roller containers 12. The chain conveyor 54 is provided with two endless roller chains 56 and 58 which at opposite ends of the conveyor 54 is guided about not shown chain wheels being pivotally arranged on horizontal axes. Both roller chains are driven by a gear motor 60 placed above the conveyor, so that said gear motor 60 being common for both sides of the conveyor 54. This involves in situation of operation of course that both roller chains have to be in operation even if actually only one is used for conveying at one side of the conveyor 54. This is secured above a floor surface by means of posts 62 on which is supported an elongated box shaped housing 64. The housing 64 comprises a central wall portion 66 upon which slide guidings 68 of plastic for the roller chains 56 and 58 are mounted. In level with the lower active conveying run of the so double chain conveyor 54 longitudinal slots or openings 70 are made, through which driving hooks 72 provided with guiding plates 74 project for cooperation with the roller containers 12 in a way corresponding to that already described, i.e. the driving hooks 72 are adapted to cooperate with the corner posts 42 of the roller containers 12, while the guiding plates 74 which are rigidly connected with the driving hooks 72 are adapted to cooperate with the platform side edges 44 of the roller containers 12. Furthermore in this embodiment of the chain conveyor the guiding plates 72 act as sliding guidings for the driving hooks 72, as the guiding plates 74 are slidably supported on a plastic rail 76 along the lower sides of the slots 70.

The active conveying direction of the chain conveyor 54 is so adapted that the lower run of the roller chains 56 and 58 is moving up from the plane of the paper which also appears from the fact that the driving hooks 72 are shown in engagement behind the corner posts 42, while the guiding plates 74 are already clear of the platform side edges 44 of the roller container 12. During the upper return run of the roller chains 56 and 58 the guiding plates 74 as well as the driving hooks 72 are shown in a turned in position inside the upper part of the housing 64, as the driving hooks 72 at 78 are hinge connected with the roller chains 56 and 58. The very turning in of the driving hooks 72 may take place by means of a guiding roller (not shown) on the driving hooks 72, said guiding roller may cooperate with an arched guiding ruler at the rear end of the chain conveyor 54. However, the turning out again of the driving hooks 72 at the front end of the conveyor may be gravitationally effected during downwardly swinging from the upper return run to the lower active conveying run. Preferably the driving hooks 72 also in this case are spring loaded to turning out, so that the hooks 72 during the return run are sliding against a particular sliding rail 80 at the inner side wall of the housing 64.

It shall be mentioned that different devices are known comprising chains for the conveying of vehicles, by which the vehicles are provided with engagement means which may be activated for the engagement with the chains and for releasing this engagement dependent on the vehicle running against a preceding vehicle or another activation stop. For the invention it is hereby essential that the engagement means as well as the releasing means are arranged on the chain and not on the vehicles, as the placement on the chains normally will be a much more appropriate solution.

By the invention the situation is then that the chains are provided with normally active driving means which are disactivatable in such a way that cooperating sensor means register the presence of a preceding vehicle or a particular activation stop such as said ruler. Already by this arrangement is obtained the advantage that the vehicles are releasable from the driving engagement without any special adaption of the vehicles.

Concerning the mentioned accumulation of the vehicles it is a special circumstance by the invention that the sensor means not only hit a stop member but remains in engagement with "the stop member" as long as they pass already placed vehicles, as in this connection it is of importance that the engagement means are reactivatable dependent on the sensor means detecting "a removed vehicle", namely the foremost vehicle in the path so that a successively forward conveying of the other vehicles then is automatically effected.

By the embodiments shown the sensor means 36 are directly mechanically built together with the engagement means 34 and it is thereby a condition that the engagement means can engage with exactly the front end of the vehicle, which has a releasing effect on the sensor means by having no preceding vehicle. This may involve that the vehicles have to be adapted so that such an engagement is established in a suitable manner, i.e. for this purpose a usable stop member at the front end of the vehicle, if necessary, at both ends for optional orientation of the vehicle, shall be present. However, the container vehicles shown are usable, as the corner posts 42, 43 constitute usable stop members.

## Claims

1. An apparatus for rowwise accumulation of roller containers (12), i.e. successively conveying of wheel supported containers from a feeding-in position (16) to a delivery position (14) of an accumulation path (2) with guiding means (10) and along one side thereof a conveying mechanism (4) comprising an endless pulling system (18, 20; 56, 58) and gripping means (34; 72) controlled by a guiding member (36; 74) for coupling a fed-in roller container (12) with the endless pulling system and conveying said roller container (12) to the delivery position (14) of the path (2), characterized in that the gripping means (34; 72) are movably connected to the endless pulling system and project sideways into the path (2) from which position the gripping means are retractable out of the path by the guiding member, which too projects sideways into the path and is rigidly connected to the gripping means.

2. An apparatus according to claim 1, characterized in that the endless pulling system consists of two roller chains (18, 20), which with mutual spacing are guided around common vertical guiding chain wheels and driving chain wheels, respectively, and which both additionally are provided with said gripping means (34).

3. An apparatus according to claim 1 or 2, characterized in that the roller chains (18, 20) at least at the active conveying run of the chain conveyor are guided in sliding profiles (22, 24) along the front side of which the gripping means (34) are additionally slidably controlled by means of a slide guiding (30).

4. An apparatus according to claim 3, characterized in that the gripping means consist of a driving hook (34) being pivotally on a vertical axis of said slide guiding (30), said driving hook (34) besides being spring loaded against a turned out conveying position in which the driving hook (34) sidewards may catch behind a preferably upstanding foremost portion (42) of a roller container (12), the guiding member being formed as a projecting guiding pawl (36) which is preferably being placed in another level than the driving hook (34).

5. An apparatus according to claim 1, characterized in that the conveying mechanism (4) is segmented, as one portion (8) of the conveying mechanism (4), which is placed at said feeding in position (16), may be turned inwardly for correct placing of roller containers (12) sideways in the accumulation path (2), said turnable portion (8) of the conveying mechanism (4) being provided with means adapted to deactivate said gripping means (34).

6. An apparatus according to claim 1, characterized in that the conveying mechanism (4) at said delivery position (14) is provided with means adapted to deactivate said gripping means (34).

7. An apparatus according to claim 4, characterized in that the turnable driving hook (34) opposite to the end portion with which the hook may get hold in the roller container (12) is provided with a guiding roller (38) which is adapted to cooperate with a guiding ruler (52) which in order to deactivate the driving hook (34), i.e. turning back thereof, may be displaced into the movement path of said guiding roller (38).

8. An apparatus according to claim 1, characterized in that said control means consist of a vertically placed guiding rail (10) with a sliding surface arranged parallelly to the conveying mechanism (4) and in a distance therefrom, against which sliding surface the side of the roller container (12) opposite to the conveying mechanism may be guided.

9. An apparatus according to claim 1, characterized in that said control means consist of a vertically placed guiding path with guiding rollers arranged parallelly to the conveying mechanism (4) and in a distance therefrom, against which guiding rollers the side of the roller containers (12) opposite to the conveying mechanism may be guided, and that the gripping means consist of clamping portions being displaceable from the pulling system and adapted to hold and carry along the containers (12) forwards in the accumulation path (2).

**Patentansprüche**

1. Vorrichtung zum Aneinanderreihen von Rollenbehältern (12), d.h. Ueberführen von durch Räder abgestützten Behältern aus einer Einlieferstellung (16) in eine Abgabestellung (14) einer Sammelbahn (2) mit Führungsmitteln (10) und einem an einer Seite dieser Bahn vorgesehenen Fördermechanismus (4), der ein endloses Mitnehmersystem (18, 20; 56, 58) und durch ein Führungselement (36; 74) gesteuerte Greifermittel (34; 72) zum Kuppeln eines eingelieferten Rollenbehälters (12) mit dem endlosen Mitnehmersystem und zum Befördern des Rollenbehälters (12) zur Abgabestellung (14) der Bahn (2) aufweist, dadurch gekennzeichnet, dass die Greifermittel (34; 72) beweglich mit dem endlosen Mitnehmersystem verbunden sind und seitwärts in die Bahn (2) hineinragen, aus welcher Stellung die Greifermittel durch das Führungselement aus der Bahn zurückziehbar sind, welches Führungselement auch seitwärts in die Bahn hineinragt und mit den Greifermitteln starr verbunden ist.

2. Vorrichtung nach Anspruch 1, dadurch gekennzeichnet, dass das endlose Mitnehmersystem aus zwei Rollenketten (18, 20) besteht, die mit Relativabständen um gemeinsame vertikale Führungskettenräder bzw. Antriebskettenräder geführt sind, und die beide zusätzlich mit den Greifermitteln (34) versehen sind.

3. Vorrichtung nach Anspruch 1 oder 2, dadurch gekennzeichnet, dass die Rollenkette (18, 20) wenigstens über die wirksame Förderbahn des Kettenförderers in Gleitprofilen (22, 24) geführt sind, entlang deren Vorderseite die Greifermittel (34) zusätzlich durch eine Gleitführung (30) gleitbar gesteuert sind.

4. Vorrichtung nach Anspruch 3, dadurch gekennzeichnet, dass die Greifermittel aus einem Mitnehmerhaken (34) bestehen, der drehbar um eine vertikale Achse der Gleitführung (30) ist, welcher Mitnehmerhaken (34) zusätzlich gegen einen nach aussen gedrehte Förderstellung federbelastet ist, in der der Mitnehmerhaken (34) seitwärts einen vorzugsweise vertikalen Vorderteil (42) eines Rollenbehälters (12) hintergreifen kann, wobei das Führungselement als vorstehende Führungsklinke (36) geformt ist, die vorzugsweise in einem anderen Niveau angeordnet ist als der Mitnehmerhaken (34).

5. Vorrichtung nach Anspruch 1, dadurch gekennzeichnet, dass der Fördermechanismus (4) in Segmente geteilt ist, wobei ein Teil (8) des Fördermechanismus (4), der in die Einlieferstellung (16) gebracht ist, einwärts gedreht werden kann, um Rollenbehälter (12) seitwärts einwandfrei in die Samelbahn (2) zu bringen, welcher drehbare Teil (8) des Fördermechanismus (4) mit Mitteln zum Ausschalten der Greifermittel (34) versehen ist.

6. Vorrichtung nach Anspruch 1, dadurch gekennzeichnet, dass der Fördermechanismus (4) in der Abgabestellung (14) mit Mitteln zum Ausschalten der Greifermittel (34) versehen ist.

7. Vorrichtung nach Anspruch 4, dadurch gekennzeichnet, dass der drehbare Mitnehmerhaken (34) gegenüber dem Endteil, mit dem der Haken am Rollenbehälter (12) angreifen kann, mit einer Führungsrolle (38) versehen ist, die mit einem Führungslineal (52) zusammenwirken kann, das zum Ausschalten des Mitnehmerhakens (34), d.h. dessen Zurückdrehen, in die Bewegungsbahn der Führungsrolle (38) eingeschoben werden kann.

8. Vorrichtung nach Anspruch 1, dadurch gekennzeichnet, dass die Steuermittel aus einer vertikal angeordneten Führungsschiene (10) bestehen, die eine Gleitfläche parallel zum Fördermechanismus (4) und im Abstand davon aufweist, gegen welche Gleitfläche die dem Fördermechanismus gegenüberliegende Seite des Rollenbehälters (12) geführt werden kann.

9. Vorrichtung nach Anspruch 1, dadurch gekennzeichnet, dass die Steuermittel aus einer vertikal angeordneten Führungsbahn bestehen, wobei Führungsrollen parallel zum Fördermechanismus (4) und im Abstand davon angeordnet sind, gegen welche Führungsrollen die dem Fördermechanismus gegenüberliegende Seite des der Rollenbehälter (12) geführt werden kann, und dass die Greifermittel aus Klemmen bestehen, die aus dem Mitnehmersystem verschiebbar sind und die Behälter (12) festhalten und in der Sammelbahn (2) vorwärtsschieben können.

## Revendications

1. Appareil pour accumuler en ligne des conteneurs roulants (12), c'est-à-dire pour transporter les uns à la suite des autres des conteneurs reposant sur des roulettes d'une position (16) d'introduction vers une position (14) de distribution d'un trajet d'accumulation (2) comportant des moyens de guidage (10) et, le long d'un premier de ses côtés, un mécanisme transporteur (4) comprenant un système de traction sans fin (18, 20; 56, 58) et des moyens d'accrochage (34; 72) commandés par un élément de guidage (36; 74) afin d'accoupler un conteneur roulant introduit (12) au système de traction sans fin et de transporter ledit conteneur roulant (12) jusqu'à la position de distribution (14) du trajet (2), caractérisé en ce que les moyens d'accrochage (34; 72) sont reliés de façon mobile au système de traction sans fin et font saillie latéralement sur le trajet (2), position à partir de laquelle les moyens d'accrochage peuvent être rétractés hors du trajet par l'élément de guidage qui fait également saillie latéralement sur le trajet et qui est relié rigidement aux moyens d'accrochage.

2. Appareil selon la revendication 1, caractérisé en ce que le système de traction sans fin comprend deux chaînes à rouleux (18, 20) qui sont espacées l'une de l'autre, qui sont guidées autour de roues de chaîne de guidage et de roues de chaîne d'entraînement verticales communes, respectivement, et qui sont en outre toutes deux équipées desdits moyens d'accrochage (34).

3. Appareil selon la revendication 1 ou 2, caractérisé en ce que les chaînes à rouleaux (18, 20), au moins au brin de transport actif du transporteur à chaînes, sont guidées dans des profilés de glissement (22, 24) le long du côté avant duquel les moyens d'accrochage (34) sont commandés en outre, de façon coulissante, par une glissière de guidage (30).

4. Appareil selon la revendication 3, caractérisé en ce que les moyens d'accrochage comprennent un crochet d'entraînement (34) pivotant sur un axe vertical de ladite glissière de guidage (30), ledit crochet d'entraînement étant en outre rappelé par ressort vers une position de transport tournée vers l'extérieur dans laquelle le crochet d'entraînement (34) peut, sur le côté, s'enclencher

en arrière d'une partie avancée (42), avantageusement orientée vers le haut, d'un conteneur roulant (12), l'élément de guidage étant réalisé sous la forme d'un cliquet de guidage (36) en saillie qui est avantageusement placé à un autre niveau que celui du crochet d'entraînement (34).

5. Appareil selon la revendication 1, caractérisé en ce que le mécanisme de transport (4) est segmenté, car une première partie (8) du mécanisme (4) de transport, qui est placée dans ladite position (16) d'introduction, peut être tournée vers l'intérieur pour placer correctement des conteneurs roulants (12) latéralement dans le trajet (2) d'accumulation, ladite partie tournante (8) du mécanisme transporteur (4) étant équipée de moyens conçus pour mettre hors d'action lesdits moyens d'accrochage (34).

6. Appareil selon la revendication 1, caractérisé en ce que le mécanisme transporteur (4), dans ladite position de distribution (14), est équipé de moyens conçus pour mettre hors d'action lesdits moyens d'accrochage (34).

7. Appareil selon la revendication 4, caractérisé en ce que le crochet tournant d'entraînement (34), à l'opposé de la partie extrême par laquelle le crochet peut établir une prise avec le conteneur roulant (12), est équipé d'un galet (38) de guidage qui est conçu pour coopérer avec une règle de guidage (52) qui, pour mettre hors d'action le crochet (34) d'entraînement, c'est-à-dire le rabattre en le faisant tourner, peut être amenée sur le trajet suivi par ledit galet de guidage (38).

8. Appareil selon la revendication 1, caractérisé en ce que lesdits moyens de commande comprennent un rail de guidage (10) disposé verticalement, présentant une surface de glissement agencée parallèlement au mécanisme transporteur (4) et à distance de celui-ci, surface de glissement contre laquelle le côté du conteneur roulant (12) opposé à celui du mécanisme transporteur peut être guidé.

9. Appareil selon la revendication 1, caractérisé en ce que lesdits moyens de commande comprennent une piste de guidage disposée verticalement, avec des galets de guidage agencés parallèlement au mécanisme transporteur (4) et à distance de celui-ci, galets de guidage contre lesquels le côté des conteneurs roulants (12) opposé au mécanisme transporteur, peut être guidé, et en ce que les moyens d'accrochage comprennent des parties de serrage pouvant être éloignées du système de traction et conçues pour maintenir et entraîner les conteneurs (12) vers l'avant sur le trajet (2) d'accumulation.

FIG 1

FIG 2

FIG 3

FIG 4

0 111 537

FIG 5

FIG 6

FIG 7

FIG 8